# FASCICULE DE BREVET EUROPEEN

(11) **EP 2 855 079 B1**
(45) Date de publication et mention de la délivrance du brevet: **30.11.2016**
(21) Numéro de dépôt: 13730011.7
(22) Date de dépôt: 30.05.2013
(51) Int. Cl.: B23K 26/38, H01S 3/042

(54) **PROCEDE ET DISPOSITIF DE PERCAGE D'UNE PIECE PAR IMPULSIONS LASER**
VERFAHREN UND VORRICHTUNG ZUM BOHREN EINES WERKSTÜCKS MIT LASERPULSEN
METHOD AND DEVICE FOR DRILLING A WORKPIECE WITH LASER PULSES

(30) Priorité: 01.06.2012 FR 1255128
(43) Date de publication de la demande: 08.04.2015
(73) Titulaire: Snecma, 75015 Paris (FR)
(72) Inventeur: LE MEUR, Yves, F-77550 Moissy Cramayel Cedex (FR); MOTTIN, Jean-Baptiste, F-77550 Moissy Cramayel Cedex (FR)
(74) Mandataire: Robert, Mathias
(86) Numéro de dépôt international: PCT/FR2013/051214
(87) Numéro de publication internationale: WO 2013/178950

(56) Documents cités:
- EP-A1- 2 457 685
- EP-A2- 0 817 338
- DE-A1- 10 063 309
- US-A- 3 806 829
- US-A- 4 740 981

## Description

L'invention concerne un procédé de perçage d'une pièce, en particulier de turbomachine, au moyen d'un laser à impulsions, voir par exemple DE-A-10063309.

De nombreuses pièces de turbomachine sont percées pour former des orifices destinés à être traversés par des flux d'air de refroidissement par exemple. C'est notamment le cas des aubes et des distributeurs de turbine ainsi que des parois d'une chambre de combustion, ces parois pouvant comprendre plusieurs milliers d'orifices de refroidissement.

Pour assurer un refroidissement efficace de ces pièces et pour ne pas réduire leur durée de vie, les orifices percés doivent avoir une géométrie spécifique et ne pas présenter de microfissures sur leurs parois internes. De plus, la technologie utilisée pour le perçage doit affecter le moins possible la santé matière des pièces.

On connaît trois technologies différentes de perçage d'une pièce de turbomachine en vue de la formation d'orifices de refroidissement : le perçage par outil coupant, le perçage EDM (*Electrical Discharge Machining),* et le perçage par impulsions laser.

Le perçage par outil coupant n'est pas approprié pour la réalisation d'orifices de petit diamètre (compris entre 0,4 et 1,5mm par exemple). Le perçage EDM permet de réaliser des orifices de petite dimension. Cependant, du fait que ce type de perçage est relativement couteux à mettre en oeuvre, il est réservé au perçage de pièces comportant un petit nombre d'orifices de refroidissement.

Le perçage par impulsions laser (du type YAG par exemple) permet également de percer des orifices de petite dimension. Cependant, les dispositifs laser de la technique actuelle sont utilisés pour la réalisation d'un petit nombre d'orifices successifs car ils ne sont pas stables et la qualité et le niveau de répétitivité de la géométrie des orifices diminuent au bout d'un certain temps d'utilisation des dispositifs. On a par exemple constaté que, lorsqu'un dispositif de perçage laser est utilisé pour la réalisation d'orifices à section circulaire, les orifices percés au bout d'un certain temps d'utilisation de ce dispositif ont une section de forme plutôt elliptique. Ce dispositif est donc utilisé pendant des durées relativement courtes, et est mis au repos pendant un temps relativement long entre deux utilisations successives.

Un laser à impulsions comprend en général une cavité à l'intérieur de laquelle est monté un barreau solide de génération des impulsions laser. Typiquement, ce barreau a une forme allongée et forme un milieu amplificateur dans lequel sont émis des photons provenant d'au moins une lampe flash logée dans la cavité. Deux miroirs, dont l'un est partiellement réfléchissant, sont disposés aux extrémités longitudinales du barreau. La cavité du laser comprend en outre un capteur de température qui est relié à des moyens de détection destinés à alerter un opérateur lorsque la température de la cavité atteint un certain seuil. Pour éviter que la cavité laser atteigne ce seuil, elle est refroidie en fonctionnement.

Dans la technique actuelle, la température de la cavité laser n'est donc pas prise en compte dans le pilotage ou la programmation du générateur laser. Le seuil de température de cavité précité est constant, quelles que soient les caractéristiques de la pièce ou des orifices à percer, et est simplement déterminé pour garantir une durée de vie optimale du générateur laser.

L'invention a pour but d'apporter une solution simple, efficace et économique au problème précité lié à l'utilisation d'un laser à impulsions pour le perçage d'orifices d'une pièce.

Elle a pour objet un procédé de perçage d'une pièce, en particulier de turbomachine, au moyen d'un générateur laser à impulsions comportant une cavité (dont la température est pilotée) dans laquelle est monté un barreau solide permettant la génération d'un faisceau laser.

Elle propose à cet effet un procédé de perçage d'une pièce, en particulier de turbomachine, au moyen d'un générateur laser à impulsions comportant une cavité dans laquelle est monté un barreau solide de génération des impulsions laser, le procédé comprenant une étape consistant à déterminer les valeurs de plusieurs paramètres de fonctionnement du générateur laser pour former des orifices d'un diamètre prédéterminé dans la pièce, caractérisé en ce qu'il consiste à déterminer une valeur de consigne de la température de cavité du générateur laser en fonction de caractéristiques des orifices à réaliser et/ou du matériau de la pièce à percer, et à asservir la température de cavité à cette valeur de consigne pendant le perçage des orifices.

Les inventeurs ont constaté que la température de la cavité du générateur laser dans laquelle est logé le barreau, a une influence sur la puissance délivrée par le générateur laser et donc la sur géométrie des orifices percés ainsi que sur l'apparition de microfissures sur les parois internes de ces orifices.

Les paramètres de fonctionnement du laser sont par exemple la fréquence d'impulsion (F), le nombre d'impulsions, la durée d'une impulsion (Tp), et/ou le pourcentage de la puissance maximale du générateur laser (H%). Ce dernier paramètre H% est une consigne qui permet de faire fonctionner le générateur laser à une partie de sa puissance maximale ou à pleine puissance (H%=100), par exemple par la variation du courant de ses lampes flash. Il peut être avantageux de choisir un paramètre H% relativement élevé (au moins supérieur à 25%) pour assurer une stabilité de la cavité et de la puissance du faisceau laser.

Selon l'invention, on ajoute aux paramètres à prendre en compte pour le pilotage du laser une température prédéterminée de la cavité, et on la maintient sensiblement constante pendant le perçage.

Le procédé comprend de préférence une étape consistant à déterminer une valeur de consigne de la température de cavité pour laquelle le générateur laser est accordé et fournit une énergie maximale pour les paramètres de fonctionnement prédéterminés. Le perçage est ainsi réalisé pour une température de la cavité donnant l'accord du laser. Cette température doit être garantie à +/-3°C. L'obturateur du faisceau laser peut être actionnable que si la consigne de température est respectée. Pour des paramètres procédé fixés, une variation de la température de la cavité laser (en dehors de la plage ci-dessus) peut avoir pour impact de « désaccorder » le générateur laser.

La température de la cavité du générateur est régulée autour d'une valeur de consigne lors du fonctionnement du laser, ce qui garantit une bonne répétitivité et une qualité optimale des perçages. Le générateur laser peut être utilisé pendant des durées plus longues que dans la technique antérieure et ne doit être mis au repos que s'il s'avère difficile ou impossible de maintenir la température de la cavité autour de la valeur de consigne (ce risque est toutefois faible si des moyens de refroidissement de la cavité sont utilisés).

L'invention se distingue de la technique antérieure notamment en ce que la température de la cavité du générateur constitue un paramètre réglable de fonctionnement qui est contrôlé et régulé pour optimiser les caractéristiques des perçages.

La régulation de cette température consiste à la maintenir aussi proche que possible de la valeur de consigne (qui dépend notamment des caractéristiques de la pièce telles que son matériau, et qui peut donc varier d'une opération de perçage à une autre), ce qui est différent de la technique antérieure dans laquelle la cavité est refroidie pour éviter de dépasser une température maximale de fonctionnement, cette température de fonctionnement pouvant prendre n'importe quelle valeur inférieure à cette valeur maximale et le refroidissement de la cavité n'étant pas modifié tant que cette valeur maximale n'est pas atteinte. Le générateur laser est mis au repos dès que la température de sa cavité atteint cette valeur maximale dans la technique antérieure.

L'invention consiste donc notamment à mettre en place un asservissement de la température de la cavité laser afin d'optimiser la géométrie et les caractéristiques des orifices percés et d'autoriser une durée d'utilisation plus longue du générateur laser tout en conservant les résultats de cette optimisation.

Pour la réalisation des perçages, le générateur laser est utilisé en mode accordé, c'est-à-dire en optimisant les paramètres procédé (Tp, F, H%) afin d'obtenir le maximum d'énergie en sortie du générateur laser. Une variation de la température de la cavité du générateur laser va avoir pour effet de « désaccorder » ce dernier.

Les inventeurs ont de plus constaté qu'il est possible d'influer sur la géométrie des perçages en faisant varier la température de la cavité.

La température de la cavité peut être régulée à +/-3° autour de la valeur de consigne. La valeur de consigne de la température est par exemple comprise entre 25 et 40°C. La valeur de consigne est de préférence déterminée pour que les orifices soient débouchant et aient en section une forme circulaire.

La température de la cavité laser peut être régulée au moyen d'un système de refroidissement de la cavité par circulation d'un fluide de refroidissement au voisinage ou à l'intérieur de la cavité. Le refroidissement de la cavité peut être optimisé par variation du débit et de la température par exemple du fluide de refroidissement.

La pièce à percer peut être une aube ou un distributeur de turbine ou une paroi d'une chambre de combustion d'une turbomachine.

Le laser est par exemple du type YAG ou tout autre type de laser à impulsions dont la température de la cavité laser peut être régulée.

La présente invention concerne également un dispositif de perçage d'une pièce, en particulier de turbomachine, au moyen d'un générateur laser à impulsions comportant une cavité dans laquelle est monté un barreau solide de génération des impulsions laser, un système de refroidissement de la cavité par circulation d'un fluide de refroidissement autour de la cavité, et des moyens de pilotage de paramètres de fonctionnement du laser, caractérisé en ce qu'il comprend des moyens d'asservissement de la température de la cavité à une valeur de consigne fonction de caractéristiques des perçages à réaliser, par variation du débit et de la température du fluide de refroidissement.

L'invention sera mieux comprise et d'autres détails, avantages et caractéristiques de l'invention apparaîtront plus clairement à la lecture de la description suivante faite à titre d'exemple non limitatif et en référence aux dessins annexés, dans lesquels :
- la figure 1 est une vue schématique partielle en perspective d'un laser à impulsions ;
- la figure 2 est une vue schématique partielle en coupe d'une pièce et d'un faisceau laser de perçage de cette pièce ;
- la figure 3 est un organigramme illustrant des étapes du procédé selon l'invention de perçage d'une pièce par impulsions laser ;
- la figure 4 est un graphe représentant l'évolution du diamètre des orifices percés et de l'énergie du faisceau laser en fonction de la température de la cavité laser dans laquelle est monté le barreau de génération des impulsions laser ;
- la figure 5 est un graphe représentant l'évolution de la puissance moyenne du faisceau laser en fonction du pourcentage de la puissance maximale du générateur laser ; et
- la figure 6 est un graphe similaire à celui de la figure 5 et illustrant l'influence de la température de la cavité sur la puissance moyenne du faisceau laser.

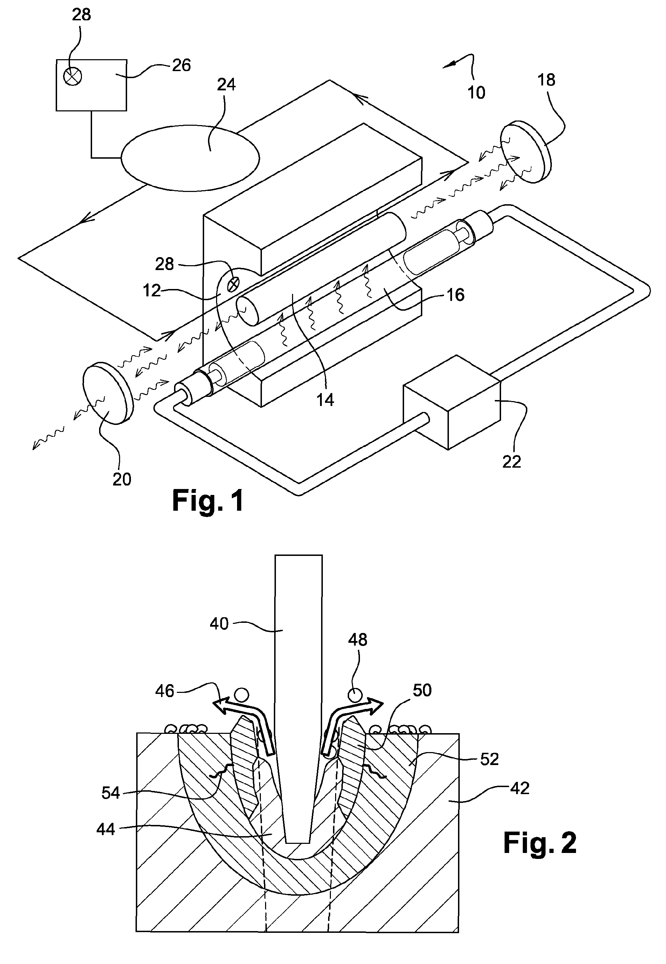

On se réfère tout d'abord à la figure 1 qui représente une partie d'un générateur laser 10 à impulsions, par exemple du type YAG, ce générateur 10 comprenant une cavité 12 à l'intérieur de laquelle sont montés un barreau solide 14 et des lampes flash 16 d'excitation du barreau solide.

Le barreau solide 14 a une forme cylindrique allongée et s'étend parallèlement à un axe longitudinal de la cavité 12, qui a également une forme cylindrique allongée dans l'exemple représenté. Le barreau 12 est par exemple un barreau de cristal. Un miroir 18, 20 est disposé à chacune des extrémités longitudinales du barreau, l'un 20 de ces miroirs étant du type à réflexion partielle.

Les lampes flash 16 sont par exemple au nombre de deux (une seule étant représentée en figure 1), chaque lampe flash étant reliée à une source électrique 22 et étant configurée pour émettre des photons dans la cavité. Les lampes 16 ont ici une forme allongée. Elles s'étendent parallèlement à l'axe longitudinal de la cavité et sont par exemple situées de part et d'autre du barreau.

Un dispositif de perçage laser par impulsions comprend classiquement un générateur laser 10 du type précité, un système de refroidissement de la cavité 12 et des moyens de pilotage de paramètres de fonctionnement du générateur laser.

La cavité laser 12 est refroidie par circulation d'un fluide de refroidissement à l'intérieur de la cavité, le barreau 14 et les lampes flash 16 étant plongés dans ce fluide. Le générateur laser 10 comprend un échangeur 24 relié aux moyens de circulation de fluide de refroidissement dans la cavité, et à une réserve 26 de fluide de refroidissement.

Le générateur laser 10 comprend en outre des capteurs 28 de température, du type thermocouples par exemple, qui sont logés dans la cavité 12 et dans la réserve 26 de fluide de refroidissement.

Le fonctionnement d'un générateur laser 10 à impulsions du type décrit ci-dessus est bien connu de l'homme du métier.

La figure 2 est une vue schématique en coupe d'une pièce en cours de perçage par impulsions laser, au moyen par exemple du générateur laser 10 décrit ci-dessus. La référence 40 désigne le faisceau émis par le générateur, ce faisceau étant dirigé sensiblement perpendiculairement à une surface de la pièce 42 à percer. Le faisceau 40 est constitué de plusieurs impulsions successives qui provoquent la fusion du matériau de la pièce (zone fondue 44), ce matériau fondu étant en partie vaporisé (référence 46) et en partie éjecté en dehors de la zone de fusion (référence 48), le reste du matériau (référence 50) restant sur les parois internes de l'orifice en cours de formation. La zone périphérique 52 s'étendant autour de l'orifice percé subit des contraintes thermiques relativement importantes. Cette zone 52, appelée Zone Affectée Thermiquement (ZAT), est un lieu de formation de microfissures 54 lors du perçage.

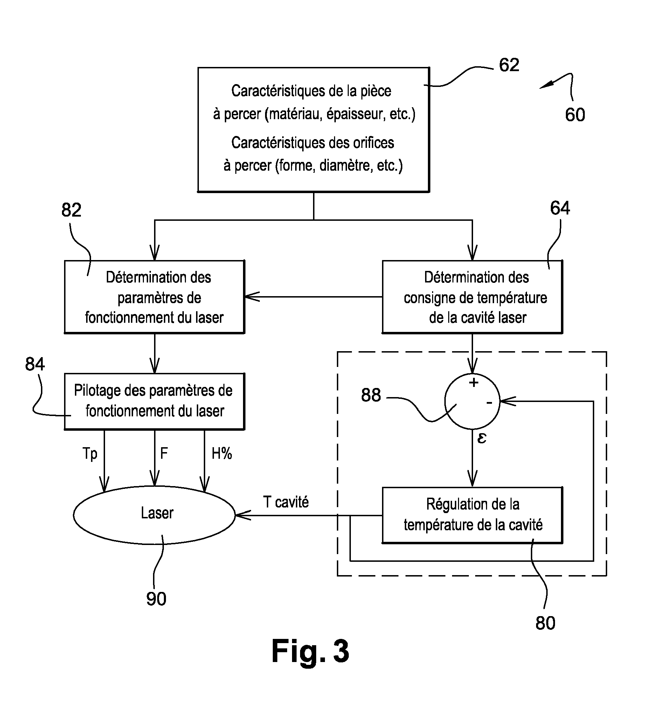

La figure 3 est un organigramme illustrant des étapes du procédé 60 selon l'invention de perçage d'une pièce par impulsions laser.

Une première étape 62 du procédé consiste à déterminer les caractéristiques de la pièce à percer ainsi que les caractéristiques des orifices à former dans cette pièce. Les caractéristiques de la pièce sont notamment son matériau (par exemple un alliage à base nickel ou cobalt), et l'épaisseur de la paroi à percer de la pièce (en général entre 0,8 et 15mm). Elles peuvent comprendre de nombreuses autres données telles que la forme et les dimensions de la pièce, la présence d'une autre paroi au voisinage de la pièce, qui ne doit pas être affectée/percée lors du perçage, la présence d'un revêtement (tel qu'une barrière thermique) sur la paroi à percer, etc.

Les caractéristiques des orifices à percer sont notamment la forme ou la géométrie de ces orifices, leurs dimensions, l'angle entre l'axe longitudinal de chaque orifice et une normale à la surface de la pièce, la profondeur des orifices, etc. Ces orifices sont en général de forme générale cylindrique et ont donc en section une forme circulaire dont le diamètre est compris entre 0,4 et 1,5mm par exemple. L'angle s'étendant entre l'axe de chaque orifice et une normale à la surface de la pièce est en général compris entre 0 et 70°. La profondeur des orifices est égale à l'épaisseur de la paroi à percer lorsque les orifices traversent cette paroi (c'est-à-dire sont du type débouchant).

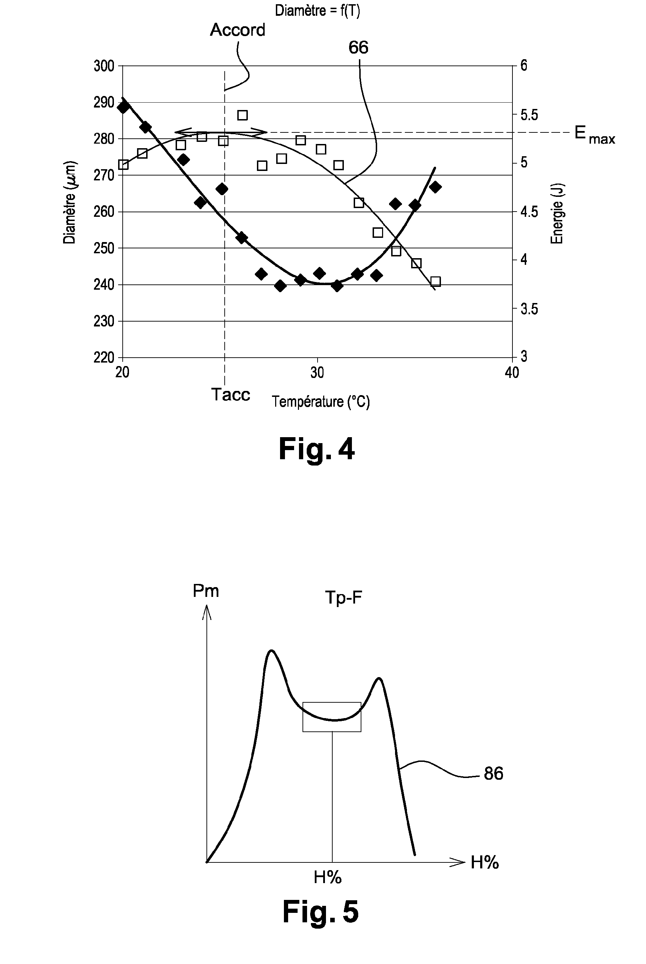

Au moins certaines des caractéristiques précitées sont utilisées pour déterminer une consigne de température de la cavité 12 du générateur laser (étape 64). C'est par exemple le cas de la géométrie des orifices à percer et du matériau de la pièce. La température de la cavité laser peut être déterminée à partir de ces caractéristiques au moyen d'un graphe tel que représenté en figure 4.

Le graphe de la figure 4 illustre (pour des paramètres donnés de fonctionnement du générateur laser, tels que Tp, F et H%, qui seront décrits ci-dessous), l'évolution de l'énergie par impulsion laser (en ordonnée à droite) et du diamètre D des orifices (en ordonnée à gauche) en fonction de la température de la cavité 12 (T). On constate que la courbe 66 E = f (T) présente un maximum Emax à la température d'accord (Tacc) de la cavité, c'est-à-dire à la température de la cavité pour laquelle le générateur laser est accordé, comme expliqué dans ce qui précède.

En fonction du matériau, du diamètre de perçage souhaité, de sa profondeur et de sa morphologie (section cylindrique, elliptique...), il est nécessaire de procéder a une identification des valeurs des paramètres Tp, F, H% et de la température T de la cavité permettant de répondre à ces spécifications.

Dans l'exemple représenté, les paramètres à l'accord du générateur laser sont Tp=1 ms, F=35Hz, H=86% et T=25°C.

Ce type de graphe peut être préalablement établi pour chaque matériau de pièces susceptibles d'être percées par impulsion laser avec le procédé selon l'invention. Dans le cas où une même pièce peut être formée en alliage métallique à base de cobalt et en alliage métallique à base de nickel, il peut être nécessaire d'établir un graphe de ce type pour chacun de ces alliages.

Cette température optimale constitue une consigne autour de laquelle la température de la cavité va être régulée au cours du perçage (étape 80) pour garantir les caractéristiques précitées des orifices (géométrie, diamètre, etc.). La température de la cavité laser est donc asservie.

Plus précisément, la régulation de la température de la cavité 12 du laser peut avoir lieu comme suit. Le dispositif de perçage selon l'invention comprend, en plus des équipements classiques de la technique antérieure (générateur laser 10, moyens de pilotage, etc.), des moyens de régulation de la température de la cavité laser. Ces moyens d'asservissement ou de régulation comprennent un comparateur 88 qui reçoit en entrée la température mesurée de la cavité et la valeur de consigne de cette température et qui va déterminer si ces valeurs sont suffisamment proches (de sorte que leur différence soit inférieure ou égale à une marge d'erreur ε de +/-1° par exemple). Dans le cas où la température de la cavité est trop importante par rapport à la valeur de consigne, le signal de sortie du comparateur est appliqué à des moyens de commande du débit et/ou de la température du fluide de refroidissement pour augmenter le refroidissement de la cavité et réduire sa température. Dans le cas où la température de la cavité est trop faible par rapport à la valeur de consigne, le comparateur commande une diminution du refroidissement de la cavité afin d'augmenter sa température. Cette régulation de la température de la cavité a lieu pendant toute la durée du perçage, et le comparateur 88 peut effectuer les comparaisons précitées à intervalles réguliers, par exemple toutes les secondes.

Le procédé comprend en outre des étapes 82, 84 consistant à déterminer les paramètres de fonctionnement du générateur laser pour la valeur de consigne (T1) de la température de la cavité laser, puis à piloter ces paramètres lors du perçage.

Les paramètres de fonctionnement du générateur laser sont par exemple la fréquence des impulsions (F), le nombre d'impulsions, la durée d'une impulsion (Tp), et le pourcentage de la puissance maximale du générateur laser (H%).

Le graphe de la figure 5 illustre l'évolution de la puissance moyenne (Pm) du faisceau laser en fonction du pourcentage de la puissance maximale du générateur laser (H%). On constate que la courbe 86 présente deux pics 88 séparés par un plateau 90. Ce plateau montre que, pour une plage de valeurs données de H%, la puissance Pm reste relativement constante. Ce type de graphe peut être réalisé pour différents matériaux et épaisseurs, et permet de déterminer une plage de valeurs de H% pour laquelle la puissance moyenne du faisceau laser est sensiblement constante. Le graphe de la figure 5 est réalisé pour une durée d'impulsion (Tp) et pour une fréquence d'impulsions (F) données.

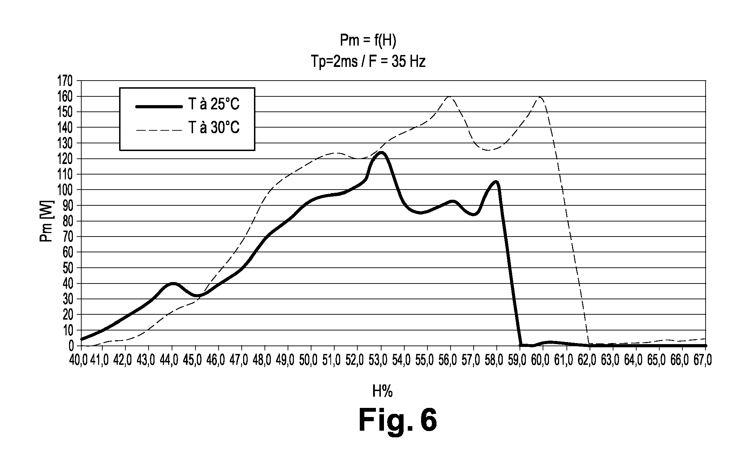

Le graphe de la figure 6 est similaire à celui de la figure 5 et illustre l'évolution de la puissance moyenne (Pm) d'un faisceau laser en fonction du pourcentage de la puissance maximale du générateur laser (H%) pour deux températures différentes de cavité (25 et 30°C). Les paramètres Tp et F sont respectivement de 2ms et de 35 Hz dans l'exemple représenté. Pour un paramètre de consigne H% donné, on constate que la puissance moyenne Pm varie en fonction de la température de cavité. Pour H%= 50, la puissance moyenne du faisceau laser est de 95W pour une température de cavité de 25°C et de 120W pour une température de cavité de 30°C. Ce graphe montre donc l'influence de la température de la cavité sur la puissance moyenne et donc l'énergie du faisceau laser, même lorsque les autres paramètres (Tp, F, H%) de fonctionnement du générateur laser sont maintenus constants.

Le générateur laser 90 est destiné à être piloté par contrôle des paramètres précités (Tp, F, H%, etc.), ainsi que par régulation de la température de la cavité, comme expliqué dans ce qui précède, pendant l'opération de perçage.

## Revendications

1. Procédé de perçage d'une pièce (42), en particulier de turbomachine, au moyen d'un générateur laser (10) à impulsions comportant une cavité (12) dans laquelle est monté un barreau solide (14) de génération des impulsions laser, le procédé comprenant une étape (82) consistant à déterminer les valeurs de plusieurs paramètres de fonctionnement du générateur laser pour former des orifices d'un diamètre prédéterminé dans la pièce, **caractérisé en ce qu'**il consiste à déterminer une valeur de consigne (T1) de la température de cavité du générateur laser en fonction de caractéristiques des orifices à réaliser et/ou du matériau de la pièce à percer, et à asservir la température de cavité à cette valeur de consigne pendant le perçage des orifices.

2. Procédé selon la revendication 1, **caractérisé en ce que** les paramètres de fonctionnement du générateur laser comprennent la fréquence des impulsions (F), le nombre d'impulsions, la durée d'une impulsion (Tp), et/ou le pourcentage de la puissance maximale du générateur laser (H%).

3. Procédé selon la revendication 1 ou 2, **caractérisé en ce que** la température de cavité est régulée à +/-3° autour de la valeur de consigne (T1).

4. Procédé selon la revendication 1, 2 ou 3, **caractérisé en ce que** la valeur de consigne est déterminée pour que les orifices soient débouchant et aient en section une forme circulaire.

5. Procédé selon l'une des revendications précédentes, **caractérisé en ce qu'**il comprend une étape consistant à déterminer une valeur de consigne (T1) de la température de cavité (12) pour laquelle le générateur laser est accordé et fournit une énergie maximale pour les paramètres de fonctionnement prédéterminés.

6. Procédé selon l'une des revendications précédentes, **caractérisé en ce que** la valeur de consigne (T1) de la température de cavité est comprise entre 25 et 40°C.

7. Procédé selon l'une des revendications précédentes, **caractérisé en ce que** la température de cavité (12) est régulée au moyen d'un système (24) de refroidissement de la cavité par circulation d'un fluide de refroidissement au voisinage ou à l'intérieur de la cavité.

8. Procédé selon l'une des revendications précédentes, **caractérisé en ce que** la pièce (42) est une aube ou un distributeur de turbine ou une paroi d'une chambre de combustion d'une turbomachine.

9. Procédé selon l'une des revendications précédentes, **caractérisé en ce que** le générateur laser (10) est du type YAG.

10. Dispositif de perçage d'une pièce, en particulier de turbomachine, au moyen d'un générateur laser (10) à impulsions comportant une cavité (12) dans laquelle est monté un barreau solide (14) de génération des impulsions laser, un système (24) de refroidissement de la cavité par circulation d'un fluide de refroidissement au voisinage ou à l'intérieur de la cavité, et des moyens de pilotage de paramètres de fonctionnement du laser, **caractérisé en ce qu'**il comprend des moyens (80, 88) d'asservissement de la température de cavité du générateur à une valeur de consigne en fonction de caractéristiques des perçages à réaliser, par variation du débit et/ou de la température du fluide de refroidissement.

## Patentansprüche

1. Verfahren zur Bohrung eines Elements (42), insbesondere eines Turbinentriebwerks, mittels eines Laserimpulsgenerators (10), der einen Hohlraum (12) aufweist, in den ein Festkörperlaserstab (14) zur Generierung von Laserimpulsen montiert ist, wobei das Verfahren eine Phase (82) enthält, in der die Werte mehrerer Betriebsparameter des Lasergenerators zum Bilden von Öffnungen im Element mit einem bestimmten Durchmesser ermittelt werden, **dadurch gekennzeichnet, dass** es darin besteht, einen Sollwert (T1) für die Hohlraumtemperatur des Lasergenerators im Hinblick auf die Merkmale der herzustellenden Öffnungen und/oder des zu durchbohrenden Materials des Elements zu bestimmen, und die Temperatur des Hohlraums während der Bohrung der Öffnungen auf diesen Sollwert zu bringen.

2. Verfahren nach Anspruch 1, **dadurch gekennzeichnet, dass** die Betriebsparameter des Lasergenerators die Impulsfrequenz (F), die Anzahl der Impulse, die Dauer eines Impulses (Tp) und/oder den Prozentsatz der maximalen Leistung des Lasergenerators (H%) umfassen.

3. Verfahren nach Anspruch 1 oder 2, **dadurch gekennzeichnet, dass** die Hohlraumtemperatur auf einen Sollwert (T1) +/-3° eingestellt ist.

4. Verfahren nach Anspruch 1, 2 oder 3, **dadurch gekennzeichnet, dass** der Sollwert so ermittelt wird, dass die Öffnungen Durchgangsöffnungen mit rundem Querschnitt bilden.

5. Verfahren nach einem der vorhergehenden Ansprüche, **dadurch gekennzeichnet, dass** es eine Phase umfasst, in der ein Sollwert (T1) für die Hohlraumtemperatur (12) ermittelt wird, für die der Lasergenerator zugelassen ist, welcher für die vorab bestimmten Betriebsparameter die maximale Energie liefert.

6. Verfahren nach einem der vorhergehenden Ansprüche, **dadurch gekennzeichnet, dass** der Sollwert (T1) der Hohlraumtemperatur zwischen 25 und 40°C liegt.

7. Verfahren nach einem der vorhergehenden Ansprüche, **dadurch gekennzeichnet, dass** die Hohlraumtemperatur (12) über ein System (24) zur Abkühlung des Hohlraums durch Umlauf eines Kühlmittels neben oder im Hohlraum reguliert wird.

8. Verfahren nach einem der vorhergehenden Ansprüche, **dadurch gekennzeichnet, dass** das Element (42) eine Schaufel oder ein Turbinenleitrad oder die Wand einer Brennkammer eines Turbinentriebwerks ist.

9. Verfahren nach einem der vorhergehenden Ansprüche, **dadurch gekennzeichnet, dass** der Lasergenerator (10) ein YAG-Generator ist.

10. Vorrichtung zur Bohrung eines Elements, insbesondere eines Turbinentriebwerks, mittels eines Laserimpulsgenerators (10), der einen Hohlraum (12) umfasst, in den ein Festkörperlaserstab (14) zur Erzeugung der Laserimpulsen, ein System (24) zur Abkühlung des Hohlraums durch Umlauf eines Kühlmittels neben oder in dem Hohlraum, und Mittel zur Steuerung der Betriebsparameter des Lasers montiert sind, **dadurch gekennzeichnet, dass** es Mittel (80, 88) zur Einstellung der Hohlraumtemperatur des Generators auf einen Sollwert entsprechend der Eigenschaften der durchzuführenden Bohrung durch Veränderung des Durchsatzes und/oder der Temperatur des Kühlmittels umfasst.

## Claims

1. A method of drilling a part (42), in particular a turbine engine part, by means of a pulse laser generator (10) comprising a cavity (12) in which there is mounted a solid laser pulse generator bar (14), the method comprising a step (82) consisting in determining the values of a plurality of operating parameters of the laser generator for forming orifices of predetermined diameter in the part, and the method being **characterized in that** it consists in determining a setpoint value (T1) for the cavity temperature of the laser generator as a function of characteristics of the orifices to be made and/or of the material of the part to be drilled, and in servo-controlling the cavity temperature to this setpoint value while drilling the orifices.

2. A method according to claim 1, **characterized in that** the operating parameters of the laser generator are the pulse frequency (F), the number of pulses, the duration of one pulse (Tp), and/or the percentage of the maximum power of the laser generator (H%).

3. A method according to claim 1 or claim 2, **characterized in that** the temperature of the cavity is regulated to within ±3°C about the setpoint value (T1).

4. A method according to claim 1, 2, or 3, **characterized in that** the setpoint value is determined so that the orifices are through orifices and of section that is circular in shape.

5. A method according to any preceding claim, **characterized in that** it includes a step consisting in determining a setpoint value (T1) for the temperature of the cavity (12) at which the laser generator is tuned and delivers maximum energy for the predetermined operating parameters.

6. A method according to any preceding claim, **characterized in that** the setpoint value (T1) for the cavity temperature lies in the range 25°C to 40°C.

7. A method according to any preceding claim, **characterized in that** the temperature of the cavity (12) is regulated by means of a system (24) for cooling the cavity by circulating a cooling fluid in the vicinity of or inside the cavity.

8. A method according to any preceding claim, **characterized in that** the part (42) is a blade or a vane of a turbine or a wall of a combustion chamber of a turbine engine.

9. A method according to any preceding claim, **characterized in that** the laser generator (10) is of the YAG type.

10. A device for drilling a part, in particular a turbine engine part, by means of a pulse laser generator (10) having a cavity (12) in which there is mounted a solid laser pulse generator bar (14), a cooling system (24) for cooling the cavity by circulating a cooling fluid in the vicinity of or inside the cavity, and control means for controlling operating parameters of the laser, the device being **characterized in that** it includes means (80, 88) for servo-controlling the cavity temperature of the generator to a setpoint value as a function of characteristics of the drilling to be performed, by varying the flow rate and/or the temperature of the cooling fluid.
